# EUROPEAN PATENT SPECIFICATION

(11) **EP 1 253 381 B1**
(45) Date of publication and mention of the grant of the patent: **08.06.2005**
(21) Application number: 01830273.7
(22) Date of filing: 24.04.2001
(51) Int. Cl.: F24C 7/08, F24C 7/06

(54) **An oven for foods**
Ofen für Lebensmittel
Four pour aliments

(43) Date of publication of application: 30.10.2002
(73) Proprietor: ING. POLIN & C. S.p.A., 37135 Verona (IT)
(72) Inventor: Cometti, Giorgio, 37126 Verona (IT)
(74) Representative: Coloberti, Luigi, Ing.

(56) References cited:
- EP-A- 0 388 605
- EP-A- 0 694 260
- DE-A- 2 518 086
- DE-A- 19 520 793
- FR-A- 2 564 952
- FR-A- 2 568 081
- PATENT ABSTRACTS OF JAPAN vol. 1998, no. 13, 30 November 1998 (1998-11-30) & JP 10 205776 A (SHIKISHIMA SEIPAN KK), 4 August 1998 (1998-08-04)

## Description

The present invention relates to an oven for foods, of the type comprising the characteristics expressed in the preamble to claim 1.

Said oven can be employed both within traditional (craftsman-run or industrial) bakeries and confectionery shops and in public food dispensation locations, where the use of products requiring to be cooked, or at least heated, on site is becoming ever more common.

As is well known, in traditional ovens the source of heat can be embodied by a burner or by electrical resistors, and ovens can be classified according to two categories: with fixed cooking trays and with rotating cooking trays.

In this latter type, in accordance with the prior art, heat is transported within the oven and transferred to the product exclusively by means of forced hot air convection.

Consequently, known rotating tray ovens are not suitable for cooking delicate product, subject to damage by the flow of hot air, nor are they suitable for cooking bread or those products that require strong heat at the base, i.e. in the area where they bear on the trays.

As regards fixed cooking tray ovens, they can use, as a heat source, either fumes or hot air in forced circulation or heat exchangers (for instance of the kind with fume pipes), or electrical resistors.

In accordance with the prior art, ovens with fixed cooking trays, which use both tray heating and forced air circulation, can in turn be classified according to three categories.

A first type of oven with fixed trays comprises heated cooking trays subdividing various independent chambers, in each of which an air turbulence is provided, with no heat contribution, produced by a fan. Each of the independent chambers is fitted with individual access doors.

This first kind of fixed tray oven presents, as is well known, some drawbacks.

Since the chambers are independent, the number of cooking trays is necessarily limited, and operating costs are quite high because each chamber needs its own heating set, while construction costs are also high because of the number of compartments and doors required.

Moreover, the overall size of the oven is also relatively large.

A second kind of fixed tray oven comprises heated cooking trays positioned in a single chamber, fitted with an access door, within which an air turbulence is provided, with no heat contribution, produced by a fan. A carriage with multiple trays (as many as there are fixed cooking trays) can also be provided, which is loaded with the product and subsequently introduced into the cooking chambers of the oven where the trays of the carriage approach the fixed cooking trays.

This second type of oven allows at least partly to overcome the economic drawbacks associated with the aforementioned first type of oven, but nonetheless presents the disadvantage of a non optimal heat transfer from the fixed cooking trays to the product due to the presence of an air gap between the trays themselves and the product.

A third type of fixed tray oven comprises a series of unheated fixed cooking trays where the product is heated by means of a flow of hot air under forced convection. The oven is provided with a single door (which may allow the introduction of a carriage previously loaded with the product) which in turn is subdivided into a series of smaller doors whose number is equal to that of the cooking trays.

This third type of fixed tray oven, too, presents some drawbacks.

The absence of heated trays does not allow to cook those products that require a strong heat at the base, and moreover heat deriving exclusively from the flow of hot air under forced convection does not allow to cook delicate products which can be damaged by air.

The three types of ovens mentioned above, in addition to the aforementioned specific drawbacks, also present considerable shared disadvantages and functional limitations.

First of all, each of these known ovens is provided with a single heat source (for example a burner or electrical resistors, as in the first two case described above, or forced hot air convection as in the third case), with a single temperature control system. In this respect, it should be noted that numerous types of products require a well determined ratio between the temperature of the cooking tray and the temperature of the overlying air, and hence between the quantity of heat administered to the product from below and that administered from above (ratio indicated arbitrarily as "R"). In fact, in none of the aforementioned types of ovens is it possible to change this ratio R. This undoubtedly constitutes a considerable operative limitation.

Moreover, in all traditional oven types, both with rotating trays and with fixed trays, it is not possible to vary within short time intervals (useful for cooking certain products) the cooking temperature, both of the trays and of the air, keeping the oven at steady state, i.e. in an optimal situation for the subsequent cooking of other products. In actuality, the temperature could be varied acting on the heat generator of the oven, but, if this were done, the time required to return the temperature value to the operative one would be too long. Besides, the entire duration of a cycle that entails temperature variations would be quite long using such ovens.

A fourth known type of ovens with fixed cooking trays, which partly overcomes the aforementioned drawbacks, is described in Italian patent 1268279 by the same Applicant.

Such a type of ovens provides both for heated fixed trays and a flow of hot air in under forced convection.

In this way the R ratio between the temperature of the trays and that of the overlying air can be varied during operation.

However, even this type of oven does not solve the problem of cooking delicate products that are spoiled if subjected to a flow of hot air, but that at the same time need a distribution of the heat between the top and the bottom part, according to a ratio R that depends on the product itself.

It is also known from DE 195 20 793, an oven constituted by a plurality of independent cooking chambers. The heating of the chambers is obtained primarily by means of a burner which sets the temperature of all the chambers at the minimum value requested by one of them. The burner heat a flow of air which is made circulate around each cooking chamber.

Furthermore, each cooking chamber comprises two heating foils associated respectively to the bottom and to the top of the chamber itself, which have the function of compensating the difference between the temperature value set in each chamber and the minimum one given by the burner.

In this situation the technical task constituting the basis for the present invention is to obtain an oven for foods that overcomes the aforementioned drawbacks.

In particular, the technical task of the present invention is to obtain an oven for foods, which allows to vary the ratio R between the quantity of heat transferred to the product to be cooked from below and the quantity of heat transferred from above.

The specified technical task and the indicated aims are substantially achieved by an oven for foods as described in the accompanying claims.

Further features and the advantages of the present invention shall become more readily apparent from the detailed description of a preferred, but not exclusive embodiment of an oven for foods, illustrated in the accompanying drawings, in which:
- Figure 1 shows a lateral elevation view, with some parts removed the better to highlight others, of an oven for foods according to the present invention;
- Figure 2 shows the oven of Figure 1 according to the trace II-II of Figure 1, with some parts removed the better to highlight others;
- Figure 3 shows a schematic lateral view of some parts of an oven according to the present invention;
- Figure 4 shows a plan view with some parts removed the better to highlight others, of a cooking tray of an oven according to the present invention;
- Figure 5 shows the tray of Figure 4 according to the trace V-V of Figure 4; and
- Figure 6 shows the tray of Figure 4 according to the trace VI-VI of Figure 4.

With reference to the aforementioned figures, the reference number 1 globally indicates an oven for foods according to the present invention.

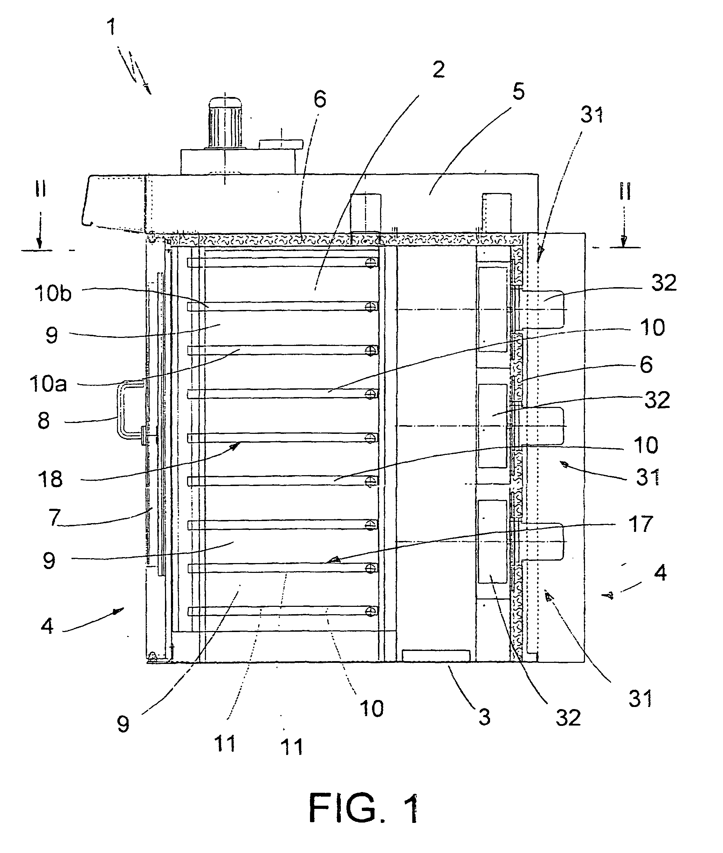

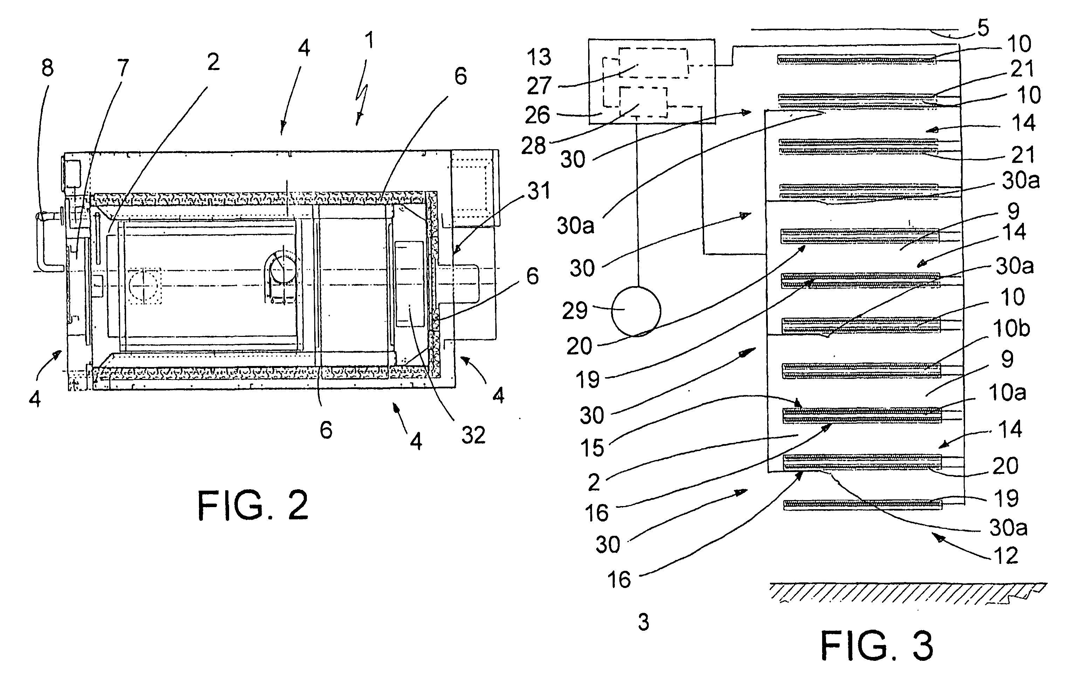

The oven 1 comprises a cooking chamber 2 delimited by a lower base 3, by four lateral walls 4, and by an upper roof 5. Advantageously the base 3, the walls 4 and the roof 5 can be insulated with heat insulation 6 (Figures 1 and 2).

As illustrated in Figures 1 and 2, in one of the lateral walls 4 is obtained at least an access door 7 to the cooking chamber 2, which can be opened by means of a handle 8.

Other embodiments can also comprise a plurality of superposed access doors, obtained either on the main door 7, or directly on a lateral wall 4 of the oven 1.

The interior volume of the cooking chamber 2 is subdivided into a plurality of SPACES 9, by a plurality of cooking trays 10 arranged horizontally, mutually superposed and distanced.

Each cooking tray 10 can be constituted by a single shelf 11 (as shown in the accompanying figures) or by a plurality of shelves set side by side.

Between the cooking trays 10 can be identified at least a lower cooking tray 12, at least an upper cooking tray 13 and a plurality of intermediate cooking trays 14.

In each cooking tray 10 can be identified an upper face 15 and a lower face 16, in such a way that each SPACE 9 is delimited inferiorly by the upper face 15 of a first cooking tray 10a, and superiorly by the lower face 16 of a second cooking tray 10b superposed to the first.

In each SPACE 9 can be identified a bottom 17 constituted by the upper face 15 of the first cooking tray 10a and a ceiling 18 constituted by the lower face 16 of the second cooking tray 10b.

The oven 1 further comprises, in each SPACE 9, first and second heating means 19, 20, which are constituted by electrical resistors 21 .

The first and the second heating means 19, 20 of each SPACE 9 are respectively associated to the bottom 17 and the ceiling 18 of the respective SPACE 9.

As stated, both the first and the second heating means 19, 20 are constituted by electrical resistors 21.

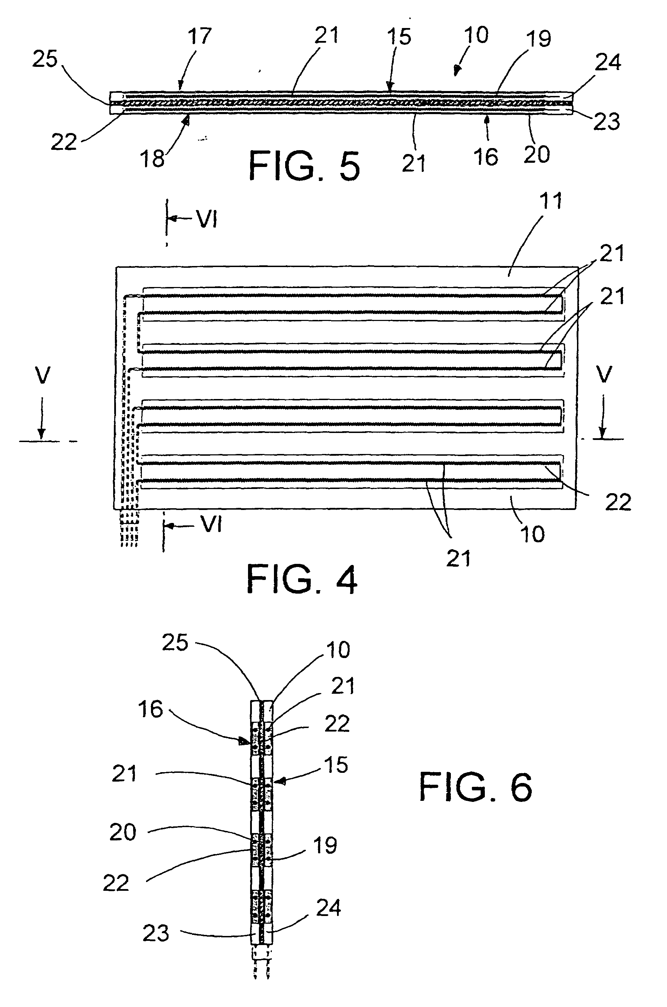

Said resistors 21 are inserted internally to the cooking tray 10, and sunk into a material 22 which is preferably an electrical insulator and a heat conductor (Figure 6).

Figure 4 illustrates an example of connection between the different resistors 21 constituting the first heating means 19 associated to a cooking tray 10.

As Figures 5 and 6 show, each cooking tray 10 is constituted by at least three superposed layers, a lower exterior layer 23 in which the second heating means 20 are inserted, an upper layer 24 in which the first heating means 19 are inserted, and an intermediate layer 25 constituted by a thermally insulating material.

The insulating intermediate material 25 guarantees the independence of the temperature of the bottom 17 of a SPACE 9 from the temperature of the ceiling 18 of the underlying SPACE 9, and vice versa.

As shown in Figure 3, the upper cooking tray 10 and the lower cooking tray 12 are the exception and they are respectively provided only with the lower exterior layer 23 and with the intermediate layer 25 and only with the upper exterior layer 24 and with the intermediate layer 25.

The first and second heating means 19, 20 of each SPACE 9 are controlled by a control device 26 operatively connected thereto.

The resistors 21 that constitute respectively the first and the second heating means 19, 20 associated to a given cooking tray 10, are connected to the control device 26 in wholly autonomous manner. Also provided are both embodiments in which the resistors 21 of all cooking trays 10 are connected, and other embodiments in which the resistors 21 of each cooking tray 10 are instead autonomous from those of the other trays 10, as well as intermediate embodiments in which the resistors 21 of the different trays 10 are mutually connected in groups.

In a first embodiment the control device 26 comprises at least a switching organ 27 to supply power alternatively to the first and the second means 19, 20 of each SPACE 9.

In particular, in the preferred embodiment, the control device 26 comprises a plurality of switching organs 27 each associated to one or more SPACES 9 to supply power alternatively to the first and second heating means 19, 20 of the SPACES 9 associated thereto.

In other embodiments the control device 26 can comprise, instead of the switching organs 27, distributing organs that simultaneously supply power both to the first and to the second heating means 19, 20 according to the set proportion.

The control device 26 can further comprise a programmable card 28 in which a plurality of possible operating cycles of the oven 1 can be stored, each, for instance, corresponding to a particular product to be cooked.

Moreover, different settings for the first and for the second heating means 19, 20 can also be input in the programmable card 28.

To the control device 26 are also connected a control interface 29 positioned externally to the oven 1 to allow the oven 1 itself to be controlled by an operator, and a temperature measuring device 30 positioned inside the cooking chamber 2.

Advantageously, in the preferred embodiment, the oven 1 comprises a plurality of temperature measuring devices 30, each constituted by a sensor 30a such as a thermocouple, positioned in correspondence with different SPACES 9.

The number of measuring devices 30 provided can be at most equal to the number of SPACES 9 present in the cooking chamber 2, each measuring device 30 being in this case associated to a distinct SPACE 9.

In the illustrated embodiment, four measuring devices 30 are provided, positioned at different heights inside the oven 1 (Figure 3).

This solution allows to obtain a more uniform cooking within the oven 1.

According to well known physical laws, heat is distributed in a non uniform manner within the cooking chamber 2, and in particular the upper area is heated more than the lower area.

In this situation, if the first and second heating means 19, 20 present in the area in which each measuring device 30 is positioned can be supplied power separately from the first and second heating means 19, 20 of the other areas, a better temperature uniformity can be maintained, controlling the operation of the first and second heating means 19, 20 of each area as a function of the temperature value measured by the measuring device 30 positioned in that area.

The oven 1 can also be provided with one or more air flow generators 31 operatively associated to the cooking chamber 2 (Figures 1 and 2).

Such an oven 1 can advantageously be used both with the air flow generators 31 operating, and with the air flow generators 31 inactive.

In the embodiment illustrated in the accompanying figure, three air flow generators 31 are provided, each constituted by a fan 32.

When a user wants to employ the oven 1 of the present invention, he/she sets the desired operating mode on the control interface 29.

Depending on whether the oven 1 is, or is not, provided with the programmable card 28 and, if so provided, depending on the characteristics of said programmable card 28, the options for setting the oven 1 vary.

In the simplest case, the operator can set, through the interface, the cooking temperature and heat distribution (R ratio) between the first and the second heating means 19, 20.

In more complex embodiments the operator can instead select a pre-set cooking programme, specifically designed for the product to be cooked.

Before or after programming the oven 1, the operator inserts the products to be cooked in the oven 1.

In particular he/she can either position the products directly onto the cooking trays 10, or insert the products with a supporting pan.

In a preferred embodiment, the products can be loaded onto a carriage with multiple shelves (as many as there are fixed cooking trays 10) which is subsequently introduced into the cooking chamber 2 of the oven 1 where the shelves of the carriage approach the fixed cooking trays.

In the preferred embodiment, during the cooking operation, depending on the programmed heat distribution between the first and the second heating means 19, 20, the control device 26 controls the switching organs 27 and causes, after a pre-set time interval (for instance one minute) the time during which power is supplied to the first and to the second heating means to follow the pre-set R ratio.

For instance, if the setting provides for heat to be distributed in such a way that the first heating means 19 supply 60% of total heat, and that the second heating means provide the remaining 40%, and if the base time interval is one minute, the first heating means 19 will be powered for 36 seconds, whilst the second heating means will be powered for 24 seconds.

The presence of the programmable 28 also allows, when installing the individual oven 1, to set, for each SPACE 9, a correction factor of the power supply distribution between the first and the second heating means 19, 20 relative to the R ratio set by the user, to compensate any differences in behaviour between the various SPACES 9.

If the oven 1 is also provided with the air flow generators 31, the oven 1 itself can be used either with or without air flow, depending on the product to be cooked or heated.

The present invention achieves important advantages.

In particular the oven for foods of the present invention allows to vary the R ratio between the quantity of heat transferred to the product to be cooked from below and the quantity of heat transferred from above, without having to use a flow of air, thereby allowing for optimal cooking of any product.

The subject oven is also advantageously usable both for cooking and for heating food products, and it is perfectly suited for installation in any facility: food factories, craftsmen's workshops, supermarkets, public food dispensation locations, and others besides.

It should also be noted that the present invention is relatively easy to produce and the cost connected with embodying the invention is not very high.

The invention thus conceived can be subject to numerous modifications and variations, without thereby departing from the scope of the inventive concept that characterises it.

All components can be replaced by technically equivalent elements and in practice all materials employed, as well as the shapes and dimensions of the various components, may be any, depending on requirements.

## Claims

1. An oven (1) for foods constituted by at least a cooking chamber (2), provided with at least an access door (7), and comprising a plurality of horizontal cooking trays (10) inserted within **the cooking chamber** (2) and mutually superposed and distanced, each of said cooking trays (10) presenting an upper face (15) and a lower face (16), the upper face (15) of a cooking tray (10) defining, with the lower face (16) of the cooking tray (10) superposed thereto, a cooking **space** (9), said lower face (16) constituting the ceiling (18) of said **space** (9) and said upper face (15) constituting the bottom (17) of said **space** (9);
each cooking space (9) being in communication which all other cooking spaces (9) of the cooking chamber (2);
said chamber **further comprising**
in each space (9) at least first electric heating means (19) associated to said bottom (17);
said first heating means (19) **being** constituted by at least an electrical resistor (21);
second heating means (20);
at least a temperature measuring device (30) positioned inside said cooking chamber (2);
at least a control interface (29) positioned externally to said cooking chamber (2); and
a control device (26) operatively connected to said first and second heating means (19), (20), to said control interface (29) and to said temperature measuring device (30) to control the operation of at least said first heating means (19), (20) ;
**characterized in that said second heating means (20) are electric,** are constituted by at least an electrical resistor (21), and are associated to said ceiling (18) of each space (9), said control device (26) being able to supply power both to the first and to the second heating means (19), (20) according to a set proportion.

2. A cooking oven as claimed in claim (1) **characterised in that** it comprises a plurality of temperature measuring devices (30) positioned inside said cooking chamber (2) each in correspondence with one of said spaces (9).

3. A cooking oven as claimed in claim (1) o (2) **characterised in that** said first heating means (19) are inserted in the cooking tray (10) whereto said first heating means (19) are associated, in correspondence with its upper face (15).

4. A cooking oven as claimed in any of the previous claims **characterised in that** said second heating means (20) are inserted in the cooking tray (10) whereto said second heating means (20) are associated, in correspondence with its lower face (16).

5. A cooking oven as claimed in any of the previous claims **characterised in that** said control device (26) comprises at least a switching organ (27) to supply power alternatively to said first and second heating means (19), (20) of each **space** (9).

6. A cooking oven as claimed in any one of the claims from 1 to 4 **characterised in that** said control device (26) comprises a plurality of switching means (27) each associated to at least one of said **spaces** (9) to supply power alternatively to said first and second heating means (19), (20) of the **spaces** (9) whereto they are associated, independently from the first and second heating means (19), (20) of the other spaces (9).

7. A cooking oven as claimed in any of the previous claims **characterised in that** it further comprises at least an air flow generator (31) operatively associated to said cooking chamber (2).

8. A cooking oven as claimed in any of the previous claims **characterised in that** it comprises at least a lower cooking tray (12), an upper cooking tray (13) and a plurality of intermediate cooking trays (14), and **in that** said intermediate cooking trays (10) comprise at least three horizontal layer, a lower exterior layer (23) whereto are associated said second heating means, an upper exterior layer (24) whereto are associated said first heating means (19), and an intermediate layer (25) constituted by thermally insulating material.

9. A cooking oven as claimed in any of the previous claims **characterised in that** said control device (26) further comprises a programmable card (28) in which the operative parameters of the oven (1) are set.

## Patentansprüche

1. Ofen ( 1 ) für Lebensmittel, bestehend aus wenigstens einer Backkammer (2), versehen mit wenigstens einer Zugangstür (7) und enthaltend eine Anzahl von horizontalen Backblechen (10), eingesetzt in die Backkammer (2) und übereinander und voneinander abstehend angeordnet, wobei jedes der genannten Backbleche (10) eine obere Fläche (15) und eine untere Fläche (16) aufweist, wobei die obere Fläche (15) eines Backbleches (10) zusammen mit der unteren Fläche (16) des darüber angeordneten Backbleches (10) einen Backraum (9) bilden, wobei die genannte untere Fläche (16) die Decke (18) des genannten Raumes (9 und die genannte obere Fläche (15) den Boden (17) des genannten Raumes (9) ) bilden; wobei jeder Backraum (9) mit allen anderen Backräumen (9) der Backkammer (2) in Verbindung steht;
ausserdem enthaltend:
in jedem Raum (9) wenigstens erste elektrische Heizmittel (19), die dem genannten Boden (17) zugeordnet sind; wobei die genannten ersten Heizmittel (19) aus wenigstens einem elektrischen Widerstand (21) bestehen;
zweite Heizmittel (20);
wenigstens eine Temperaturmessvorrichtung (30), positioniert im Inneren der genannten Backkammer (2);
wenigstens eine Steuerschnittstelle (29), positioniert ausserhalb der genannten Backkammer (2); und
eine Steuervorrichtung (26), die betrieblich an die genannten ersten und zweiten Heizmittel (19), (20), an die genannte Steuerschnittstelle (29) und an die genannte Temperaturmessvorrichtung (30) angeschlossen ist, um den Betrieb von wenigstens den ersten genannten Heizmitteln ( 19, (20) zu steuern;
**dadurch gekennzeichnet, dass** die genannten zweiten Heizmittel (20) elektrisch sind, aus wenigstens einem elektrischen Widerstand gebildet und der genannten Decke (18) eines jeden Raumes (9) zugeordnet sind, wobei die genannte Steuervorrichtung (26) in der Lage ist, sei es den ersten wie auch den zweiten Heizmitteln (19), (20) nach einem eingestellten Verhältnis Leistung zuzuführen.

2. Backofen nach Patentanspruch 1, **dadurch gekennzeichnet, dass** er eine Anzahl von Temperaturmessvorrichtungen (30) enthält, positioniert im Inneren der genannten Backkammer (2), jeweils entsprechend zu einem der genannten Räume (9).

3. Backofen nach Patentanspruch 1 oder 2, **dadurch gekennzeichnet, dass** die genannten ersten Heizmittel (19) in das Backblech (10) eingesetzt sind, welchem die genannten ersten Heizmittel (19) zugeordnet sind, und zwar entsprechend zu dessen oberer Fläche (15).

4. Backofen nach einem beliebigen der vorstehenden Patentansprüche, **dadurch gekennzeichnet, dass** die genannten zweiten Heizmittel (20) in das Backblech (10) eingesetzt sind, welchem die genannten zweiten Heizmittel (20) zugeordnet sind, und zwar entsprechend zu dessen unterer Fläche (16).

5. Backofen nach einem beliebigen der vorstehenden Patentansprüche, **dadurch gekennzeichnet, dass** die genannte Steuervorrichtung (26) wenigstens ein Schaltmittel (27) enthält, um wechselweise den genannten ersten und zweiten Heizmitteln (19), (20) eines jeden Raumes (9) Leistung zuzuführen.

6. Backofen nach einem beliebigen der Patentansprüche von 1 bis 4, **dadurch gekennzeichnet, dass** die genannte Steuervorrichtung (26) eine Anzahl von Schaltmitteln (27) enthält, jedes wenigstens einem der genannten Räume (9) zugeordnet, um wechselweise den genannten ersten und zweiten Heizmitteln (19), (20) eines jeden Raumes (9), denen sie zugeordnet sind, Leistung zuzuführen, unabhängig von den ersten und zweiten Heizmitteln (19), (20) der anderen Räume (9).

7. Backofen nach einem beliebigen der vorstehenden Patentansprüche, **dadurch gekennzeichnet, dass** er ausserdem wenigstens einen Luftstromerzeuger (31) enthält, der betrieblich der genannten Backkammer (2) zugeordnet ist.

8. Backofen nach einem beliebigen der vorstehenden Patentansprüche, **dadurch gekennzeichnet, dass** er wenigstens ein unteres Backblech (12), ein oberes Backblech (13) und eine Anzahl von zwischenliegenden Backblechen (14) enthält, und dadurch, dass die genannten zwischenliegenden Backbleche (10) wenigstens drei horizontale Schichten enthalten, und zwar eine untere äussere Schicht (23), welcher die genannten zweiten Heizmittel zugeordnet sind, eine obere äussere Schicht (24), welcher die genannten ersten Heizmittel (19) zugeordnet sind, und eine mittlere Schicht (25), die aus wärmeisolierendem Material gebildet ist.

9. Backofen nach einem beliebigen der vorstehenden Patentansprüche, **dadurch gekennzeichnet, dass** die genannte Steuervorrichtung (26) ausserdem eine programmierbare Karte (28) enthält, in welche die Betriebsparameter des Ofens (1) eingegeben werden.

## Revendications

1. Un four (1) pour aliments formé d'au moins une chambre de cuisson (2) dotée d'au moins une porte d'accès (7) et comprenant une multiplicité de plaques de cuisson horizontales (10) insérées les unes au-dessus des autres à l'intérieur de la chambre de cuisson (2) et espacées les unes des autres, chacune desdites plaques de cuisson (10) présentant une face supérieure (15) et une face inférieure (16), la face supérieure (15) d'une plaque de cuisson (10) définissant, avec la face inférieure (16) de la plaque de cuisson immédiatement au-dessus, un espace de cuisson (9) délimité, d'une part, par ladite face inférieure (16) faisant office de plafond (18) et, d'autre part, par ladite face supérieure (15) faisant office de fond (17) dudit espace (9) ;
chaque espace de cuisson (9) étant en communication avec tous les autres espaces de cuisson (9) de la chambre de cuisson (2) ;
ladite chambre comprenant également, dans chaque espace de cuisson (9), au moins des premiers éléments de chauffe électriques (19) associés audit fond (17) et comprenant au moins une résistance électrique (21) ;
des seconds éléments de chauffe (20) ;
au moins un dispositif de mesure de la température (30) situé à l'intérieur de ladite chambre de cuisson (2) ;
au moins une interface de commande (29) située à l'extérieur de ladite chambre de cuisson (2) ; et
un dispositif de commande (26) relié opérationnellement auxdits premiers et seconds éléments de chauffe (19), (20), à ladite interface de commande (29) et audit dispositif de mesure de la température (30) pour contrôler au moins le fonctionnement desdits premiers et seconds éléments de chauffe (19), (20) ;
ledit four pour aliments étant **caractérisé en ce que** lesdits seconds éléments de chauffe (20) sont électriques, formés d'au moins une résistance électrique (21) et associés audit plafond (18) de chaque espace (9), ledit dispositif de commande (26) étant à même d'alimenter lesdits premiers et seconds éléments de chauffe (19), (20) dans des proportions établies.

2. Un four pour aliments selon la revendication (1) **caractérisé en ce qu'**il comprend une multiplicité de dispositifs de mesure de la température (30), situés à l'intérieur de ladite chambre de cuisson (2), chacun d'entre eux correspondant à l'un desdits espaces de cuisson (9).

3. Un four pour aliments selon la revendication (1) ou (2) **caractérisé en ce que** lesdits premiers éléments de chauffe (19) sont intégrés dans la plaque de cuisson (10) à laquelle lesdits premiers éléments de chauffe (19) sont associés, en correspondance de la face supérieure (15).

4. Un four pour aliments selon l'une quelconque des revendications précédentes **caractérisé en ce que** lesdits seconds éléments de chauffe (20) sont intégrés dans la plaque de cuisson (10), à laquelle lesdits premiers éléments de chauffe (19) sont associés, en correspondance de la face inférieure (16).

5. Un four pour aliments selon l'une quelconque des revendications précédentes **caractérisé en ce que** ledit dispositif de commande (26) comprend au moins un organe de commutation (27) permettant d'alimenter alternativement les premiers et les seconds éléments de chauffe (19), (20) de chaque espace de cuisson (9).

6. Un four pour aliments selon l'une quelconque des revendications de 1 à 4 **caractérisé en ce que** ledit dispositif de commande (26) comprend une multiplicité d'organes de commutation (27), chacun d'entre eux étant associé à au moins l'un desdits espaces de cuisson (9) et permettant d'alimenter alternativement les premiers et les seconds éléments de chauffe (19), (20) des espaces de cuisson (9) auxquels ils sont associés, indépendamment des premiers et seconds éléments de chauffe (19), (20) des autres espaces de cuisson (9).

7. Un four pour aliments selon l'une quelconque des revendications précédentes **caractérisé en ce qu'**il comprend également au moins un générateur de circulation d'air (31) associé opérationnellement à ladite chambre de cuisson (2).

8. Un four pour aliments selon l'une quelconque des revendications précédentes **caractérisé en ce qu'**il comprend au moins une plaque de cuisson inférieure (12), une plaque de cuisson supérieure (13) et une multiplicité de plaques de cuisson intermédiaires (14) et **en ce que** lesdites plaques de cuisson intermédiaires (10) comprennent au moins trois couches horizontales, une couche extérieure inférieure (23) à laquelle sont associés lesdits seconds éléments de chauffe, une couche extérieure supérieure (24) à laquelle sont associés lesdits premiers éléments de chauffe (19), et une couche intermédiaire (25) constituée par un matériau d'isolation thermique.

9. Un four pour aliments selon l'une quelconque des revendications précédentes **caractérisé en ce que** ledit dispositif de commande (26) comprend également une carte programmable (28) dans laquelle sont enregistrés les paramètres de fonctionnement du four (1).
